(19) Europäisches Patentamt / European Patent Office / Office européen des brevets

(11) **EP 2 391 989 B1**

(12) **FASCICULE DE BREVET EUROPEEN**

(45) Date de publication et mention de la délivrance du brevet:
**02.04.2014 Bulletin 2014/14**

(21) Numéro de dépôt: **10707577.2**

(22) Date de dépôt: **25.01.2010**

(51) Int Cl.:
*G06T 11/00* *(2006.01)*

(86) Numéro de dépôt international:
**PCT/FR2010/050103**

(87) Numéro de publication internationale:
**WO 2010/086541 (05.08.2010 Gazette 2010/31)**

(54) **PROCEDE DE REPRESENTATION D'UN MATERIAU**

VERFAHREN ZUM REPRÄSENTIEREN EINES MATERIALS

METHOD FOR REPRESENTING A MATERIAL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.01.2009 FR 0950522**

(43) Date de publication de la demande:
**07.12.2011 Bulletin 2011/49**

(73) Titulaire: **Orange**
**75015 Paris (FR)**

(72) Inventeurs:
- **BARIL, Jérôme**
  **F-33127 Martignas (FR)**
- **GIOIA, Patrick**
  **F-35530 Servon Sur Vilaine (FR)**

(56) Documents cités:
**WO-A-2008/110719**

- **SUYKENS F ET AL: "Interactive Rendering with Bidirectional Texture Functions" COMPUTER GRAPHICS FORUM, vol. 22, no. 3, septembre 2003 (2003-09), pages 463-472, XP002546949 Blackwell Publishing**
- **MALZBENDER T ET AL: "POLYNOMIAL TEXTURE MAPS" COMPUTER GRAPHICS. SIGGRAPH 2001. CONFERENCE PROCEEDINGS. LOS ANGELES, CA, AUG. 12 - 17, 2001; [COMPUTER GRAPHICS PROCEEDINGS. SIGGRAPH], NEW YORK, NY : ACM, US, 12 août 2001 (2001-08-12), pages 519-528, XP001049925 ISBN: 978-1-58113-374-5 cité dans la demande**
- **BARIL J ET AL: "Polynomial wavelet trees for bidirectional texture functions" INTERNATIONAL CONFERENCE ON COMPUTER GRAPHICS AND INTERACTIVE TECHNIQUES ACM SIGGRAPH 2008 TALKS, 11 août 2008 (2008-08-11), - 15 août 2008 (2008-08-15) pages 1-1, XP002546950**

**Description**

La présente invention se situe dans le domaine de l'informatique graphique, plus particulièrement dans le domaine de la représentation et du rendu de matériaux dans un environnement virtuel.

En effet, l'invention concerne un procédé de représentation d'un matériau et un procédé de rendu correspondant.

L'invention peut être utilisée dans des applications de navigation virtuelle, des jeux vidéo, des films d'animation, etc.

De telles applications comportent un rendu en temps réel de scènes virtuelles dans lesquelles des objets réels sont représentés par des objets virtuels.

Pour obtenir un rendu réaliste, la représentation d'un objet nécessite non seulement une représentation géométrique de cet objet (forme, taille, etc.) mais aussi une représentation de l'aspect de cet objet et en particulier de l'interaction entre une source de lumière et cet objet.

Cette interaction dépend du matériau qui constitue l'objet. Par exemple, pour un matériau translucide tel que la peau, un rayon lumineux est en partie réfléchi à la surface du matériau et en partie absorbé. Selon un autre exemple, un matériau peut comporter des spécificités géométriques (relief, rugosité, etc.) qui perturbent le trajet de la lumière.

Il existe des fonctions pour modéliser l'interaction entre une source de lumière et un matériau.

Ainsi, les fonctions BRDF (pour *Bidirectional Reflectance Distribution Functions* en anglais) représentent l'énergie lumineuse réfléchie à la surface d'un matériau. Ces fonctions sont exprimées relativement à des directions de la lumière et relativement à des points de vue.

Certains matériaux, par exemple une surface métallique, peuvent être représentés par une fonction BRDF. Une telle représentation n'est pas possible pour un matériau complexe dont la surface n'est pas uniforme, par exemple pour une surface granuleuse ou une surface qui présente des variations de couleur, etc.

On utilise alors des fonctions SVBRDF (pour *Spatially-Varying Bidirectional Reflectance Distribution Functions* en anglais) ou des fonctions BTF (pour *Bidirectional Texture Functions* en anglais) qui sont exprimées relativement à des directions de la lumière et à des points de vue mais également relativement à la surface du matériau. Les fonctions BTF permettent de représenter des matériaux dont la surface peut induire des effets de parallaxe alors que les fonctions SVBRDF ne permettent de représenter que des matériaux dont la surface est quasiment plane.

Les fonctions BTF sont constituées d'un ensemble de données, encore appelé texture, et comptent six dimensions. Les données sont obtenues à partir d'un ensemble d'images du matériau où chaque image est associée à une direction de la lumière et à un point de vue. Les six dimensions correspondent aux coordonnées spatiales des pixels d'une image équivalents aux points à la surface du matériau, aux coordonnées polaires des directions de la lumière et aux coordonnées polaires des points de vue.

Une fois acquises, ces données sont transformées et notamment compressées pour obtenir une fonction compacte, c'est-à-dire de faible taille, pour des raisons de stockage et pour permettre un rendu rapide sur du matériel graphique. Une des difficultés à résoudre lors de la compression est d'obtenir une fonction compacte la plus proche possible de la fonction d'origine issue de l'acquisition des données et donc de limiter l'erreur due à la compression.

Il existe de nombreuses techniques de compression des fonctions BTF parmi lesquelles des techniques d'approximation paramétrique.

Ainsi, Tom Malzbender et al. dans l'article intitulé "Polynomial Texture Maps" dans SIGGRAPH '01 : Proceedings of the 28th annual conférence on computer graphics and interactive techniques, pages 519-528, New-York, NY, USA, 2001, décrivent une technique d'approximation paramétrique de fonction BTF où l'approximation est réalisée par un ensemble de polynômes. Pour un point de vue fixe, en l'occurrence le point de vue frontal, un polynôme est défini par pixel selon les variations directionnelles de la lumière.

Chaque pixel ou point à la surface du matériau reçoit la lumière selon un ensemble de directions. Une direction correspond à un axe passant par le point considéré et un point à la surface d'une demi-sphère dont la base repose sur le matériau. Les directions de la lumière appartiennent à un espace à trois dimensions. La technique de Tom Malzbender et al. consiste à projeter les directions de la lumière vers un espace à deux dimensions et à approximer la surface résultante par des polynômes. La projection utilisée est une projection orthographique.

Cette technique présente l'inconvénient d'être définie pour un seul point de vue déterminé, le point de vue frontal. La représentation d'un matériau selon un seul point de vue est insuffisante pour une utilisation dans un environnement photo réaliste dynamique.

Dans l'article intitulé *"Preserving realism in real-time rendering of bidirectional texture functions"* paru dans le cadre de OpenSG Symposium 2003, pages 89-96, Eurographics Association, Switzerland, avril 2003, J. Meseth et al. appliquent la technique précédente à chacun des points de vue de l'ensemble des points de vue visibles. Or, les effets induits par une variation de la direction de la lumière ne sont pas uniformes suivant les points de vue. Par exemple, un matériau tend à devenir plus spéculaire, c'est-à-dire à plus réfléchir la lumière, pour des directions rasantes de la lumière. Par conséquent, il n'est pas judicieux d'utiliser le même type de projection d'un point de vue à un autre.

Cette technique présente un autre inconvénient, lequel concerne la taille de l'ensemble des données qui croît linéairement avec le nombre de points de vue.

La publication internationale WO2008/110719 décrit une méthode de représentation de la texture d'un objet par approximation polynomiale de cette texture, puis par compression en ondelettes de l'approximation obtenue.

Un des buts de l'invention est de remédier aux inconvénients de l'état de la technique précité.

Ainsi, la présente invention concerne, selon un premier aspect, un procédé de représentation d'une texture d'un objet selon la revendication 1.

Ainsi, le procédé de représentation d'un matériau selon l'invention tient compte de chacun des points de vue.

L'approximation polynomiale de la fonction de modélisation d'origine permet de représenter la fonction de modélisation d'origine par un ensemble de textures polynomiales de taille inférieure à celle de l'ensemble des données d'origine.

L'approximation géométrique du résidu réduit les erreurs d'approximation induites par l'approximation polynomiale et permet d'obtenir une représentation plus riche et plus proche de la fonction d'origine.

La simplification permet d'éliminer les redondances de l'approximation polynomiale de la fonction de modélisation d'origine et de l'approximation géométrique du résidu et donc d'obtenir une compression plus grande de la fonction de modélisation d'origine.

Selon une caractéristique préférée, la fonction de modélisation d'origine est une fonction BTF (pour "Bidirectional Texture Function") ou une fonction SVBRDF (pour " Spacially-Varying Bidirectional Reflectance Distribution Function") .

Ainsi le procédé est adapté aux fonctions BTF et aux fonctions SVBRDF.

Selon une caractéristique préférée, l'étape d'approximation polynomiale de la fonction de modélisation d'origine est réalisée à partir d'un maillage d'origine résultant d'une projection paraboloïde d'un espace à trois dimensions dans un espace à deux dimensions de vecteurs médians obtenus à partir d'un vecteur représentatif de la direction du point de vue et de vecteurs représentatifs respectivement de chacune des directions de la lumière.

La projection paraboloïde améliore les résultats qualitatifs de l'approximation polynomiale de la fonction de modélisation d'origine pour un point de vue donné notamment lorsque la lumière est rasante.

La projection d'un vecteur médian permet de généraliser la projection de l'espace des directions de la lumière à l'ensemble des points de vue et ainsi d'améliorer encore plus les résultats qualitatifs de l'approximation polynomiale de la fonction de modélisation d'origine.

Selon une caractéristique préférée, l'étape d'approximation géométrique du résidu est réalisée à partir d'un maillage d'approximation résultant d'une projection paraboloïde d'un espace à trois dimensions dans un espace à deux dimensions de vecteurs médians obtenus à partir d'un vecteur représentatif de la direction du point de vue et de vecteurs représentatifs respectivement de directions choisies parmi les directions de la lumière.

L'utilisation d'un maillage d'approximation à partir de directions choisies parmi les directions de la lumière permet de minimiser les erreurs de l'approximation polynomiale.

Selon une caractéristique préférée, l'étape de simplification par décomposition en paquets d'ondelettes de l'approximation polynomiale de la fonction de modélisation d'origine et de l'approximation géométrique du résidu comporte l'obtention de sous-bandes composées de coefficients d'approximation et de coefficients de détail.

Cette étape permet de projeter la représentation obtenue de la fonction de modélisation d'origine dans un espace d'analyse facilitant l'identification des informations redondantes.

Selon une caractéristique préférée, par application d'un critère de simplification, des sous-bandes sont sélectionnées parmi les sous-bandes obtenues et, lorsqu'une sous-bande est sélectionnée, une carte de présence est renseignée.

Ainsi, il est possible de trier l'ensemble des sous-bandes selon leur contribution dans la représentation et de supprimer les informations de moindre importance par application d'un critère choisi. La carte de présence permet d'identifier les informations retenues pour la représentation mais aussi celles qui n'ont pas été retenues.

L'invention concerne également un procédé de rendu selon la revendication 7.

Ainsi, le procédé de rendu selon l'invention autorise un rendu temps réel directement sur du matériel graphique pour des performances (image par seconde) élevées.

De plus, le procédé de rendu s'exécute en intégralité sur le matériel graphique et libère ainsi les ressources logicielles des processeurs classiques pour d'autres processus dans un environnement virtuel complexe.

L'invention concerne également un dispositif selon la revendication 8.

L'invention concerne également un dispositif de rendu selon la revendication 9.

L'invention concerne aussi un programme d'ordinateur selon la revendication 10.

L'invention concerne aussi un programme d'ordinateur selon la revendication 11.

L'invention concerne aussi un terminal graphique comprenant un dispositif de rendu tel que décrit précédemment.

L'invention sera mieux comprise à la lumière de la description qui suit d'un mode particulier de réalisation d'un procédé de représentation et d'un procédé de rendu d'un matériau selon l'invention, en référence aux dessins annexés pour lesquels :

- la figure 1 représente un organigramme d'un procédé de représentation d'un matériau selon l'invention,
- les figures 2a et 2b représentent respectivement un maillage d'origine et un maillage d'approximation,
- la figure 3 représente un organigramme d'un procédé de rendu d'un matériau selon l'invention,
- la figure 4 illustre un système mettant en oeuvre un procédé de représentation et un procédé de rendu d'un matériau selon respectivement les figures 1 et 3.

L'invention concerne un procédé de représentation d'un matériau par approximation d'une fonction de modélisation de l'interaction entre la lumière émise par une source de lumière et le matériau considéré.

La fonction de modélisation est une fonction BTF ou une fonction SVBRDF.

Différentes transformations sont appliquées à la fonction de modélisation d'origine pour obtenir une représentation plus compacte du matériau considéré tout en conservant un bon niveau de réalisme.

L'invention concerne également un procédé de rendu temps réel sur du matériel graphique à partir d'une représentation d'un matériau obtenue par le procédé précédent.

La représentation d'un matériau, obtenue par l'application du procédé de représentation d'un matériau cité ci-dessus, peut être chargée sur un matériel graphique. En lui appliquant un procédé de rendu tel que défini par l'invention, on obtient alors un rendu temps réel du matériau considéré.

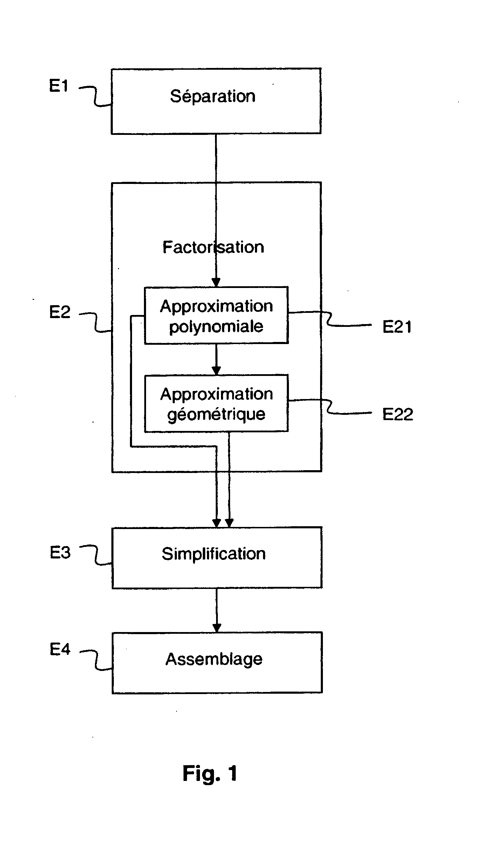

La **figure 1** représente un organigramme d'un procédé de représentation d'un matériau selon l'invention.

Selon un mode particulier de réalisation de l'invention, l'interaction entre une source de lumière et le matériau considéré est modélisée par une fonction BTF que l'on convient d'appeler fonction BTF d'origine.

Cette fonction BTF d'origine est constituée de textures, ou d'un ensemble de données, obtenues à partir d'un ensemble d'images du matériau. Chaque image est associée à une direction de la lumière et à un point de vue.

A titre d'exemple non limitatif, l'invention a été mise en oeuvre pour 81 directions de la lumière et 81 points de vue.

Cette fonction BTF d'origine est une fonction à six dimensions et s'exprime de la façon suivante :

$$\mathbf{BTF}\ (x, y, \theta_v, \Phi_v, \theta_l, \Phi_l)$$

où :

- (x.y) sont les coordonnées d'un pixel d'une image et correspondent aux coordonnées spatiales d'un point à la surface du matériau.
- $(\theta_v, \Phi_v)$ sont les coordonnées polaires d'un point de vue v,
- $(\theta_l, \Phi_l)$ sont les coordonnées polaires d'une direction 1 de la lumière.

Le procédé de représentation d'un matériau selon l'invention comporte un ensemble d'étapes au cours desquelles différentes transformations sont appliquées à la fonction BTF d'origine, notée $BTF\ (x, y, \theta_v, \Phi_v, \theta_l, \Phi_l)$ pour obtenir une fonction BTF compacte, notée $BTF(x, y, \theta_v, \Phi_v, \theta_l, \Phi_l)$.

Le procédé selon l'invention poursuit plusieurs objectifs parmi lesquels obtenir une fonction BTF compacte de taille très réduite et la plus proche possible de la fonction BTF d'origine.

Dans ce qui suit, le procédé exploite des transitions douces de l'espace des directions de la lumière, c'est-à-dire que pour deux directions voisines de la lumière, les deux images correspondantes comportent de faibles différences. Le procédé exploite également la cohérence spatiale, c'est-à-dire la similarité entre deux pixels voisins.

Le procédé tel que représenté à la figure 1 comporte une première étape E1 de séparation.

Au cours de cette étape, les textures constitutives de la fonction BTF d'origine sont séparées suivant les différents points de vue.

Cette séparation permet d'éviter tout effet de parallaxe induit par un changement de point de vue. Il y a effet de parallaxe lorsque certaines parties de la surface du matériau peuvent être occultées en regardant celui-ci à partir d'un point de vue et non occultées en le regardant à partir d'un autre point de vue.

A l'issue de l'étape E1, on obtient une fonction BTF, pour un point de vue donné, notée $BTF_v$.

Cette fonction est constituée des textures correspondant, pour un point de vue donnée, à l'ensemble des directions de la lumière et à tous les pixels ou points. On a donc :

$$BTF_v(x, y, \theta_l, \Phi_l)$$

où

- v est un point de vue donné,
  et comme précédemment :
- (x,y) sont les coordonnées d'un pixel d'une image et correspondent aux coordonnées spatiales d'un point à la surface du matériau,
- $(\theta_l,\Phi_l)$ sont les coordonnées polaires d'une direction 1 de la lumière.

La fonction BTF d'origine s'exprime alors sous la forme :

$$BTF\left(x,y,\theta_v,\Phi_v,\theta_l,\Phi_l\right)=\left\{BTF_v\left(x,y,\theta_l,\Phi_l\right)\right\},\forall v \,.$$

La suite du procédé est effectuée par point de vue, chaque point de vue étant pris séparément.

Le procédé comporte une étape E2 de factorisation.

Cette étape E2 de factorisation comprend l'approximation des textures obtenues au cours de l'étape E1 de séparation pour un point de vue donné, c'est-à-dire l'approximation de la fonction BTF par point de vue désignée par $BTF_v$.

Cette étape E2 de factorisation permet de réduire la taille de l'ensemble des textures de la fonction $BTF_v$ afin de disposer d'une fonction BTF compacte c'est-à-dire d'un format réduit et plus facilement exploitable.

L'étape E2 comporte deux sous étapes E21 et E22.

La sous étape E21 correspond à l'approximation proprement dite de la fonction $BTF_v$ considérée.

Au cours de la sous étape E22, on cherche à réduire l'erreur résultant de l'approximation précédente pour que le résultat de l'étape E2 de factorisation soit le plus proche possible des textures obtenues à l'issue de l'étape E1 de séparation.

Pour réaliser l'approximation de l'étape E21, on utilise une technique d'approximation polynomiale similaire à la technique d'approximation de Tom Malzbender et al. décrite ci-dessus.

Des polynômes biquadratiques par pixel sont utilisés pour formaliser de manière analytique les interactions suivant les directions de la lumière pour un point de vue donné.

Ces polynômes sont définis de telle sorte que, pour un pixel p et un point de vue v, on a :

$$BTF_{p,v}(\theta_l,\Phi_l) \approx Q_{p,v}(\pi(\theta_l,\Phi_l))$$

$$Q_{p,v}(\pi(\theta_l,\Phi_l) = \sum_{z,t} a_{z,t} l_x^z l_y^t \,.$$

$BTF_{p,v}(\theta_l,\Phi_l)$ est la fonction BTF que l'on approxime. Elle est constituée des textures correspondant à l'ensemble des directions de la lumière pour un pixel p donné et un point de vue v.

$(\theta_l,\Phi_l)$ sont les coordonnées polaires d'une direction 1 de la lumière.

$Q_{p,v}$ est le polynôme résultant de l'approximation. $Q_{p,v}$ est défini par la projection paraboloïde $\pi$ des directions 1 de la lumière d'un espace à trois dimensions vers un espace à deux dimensions $(l_x, l_y)$.

z et t varient suivant le degré du polynôme, en l'occurrence biquadratique, donc $z,t \in [0;2]$.

Les coefficients $a_{z,t}$ sont les coefficients du polynôme $Q_{p,v}$.

La fonction de projection $\pi$ est telle que :

$$\pi(\theta_l,\Phi_l) = (l_x,l_y)$$

où

- $(\theta_l,\Phi_l)$ sont les coordonnées polaires d'une direction l de la lumière,
- $(l_x,l_y)$ sont les coordonnées spatiales de la projection de la direction 1 de la lumière dans l'espace de projection à deux dimensions.

A la différence de la technique d'approximation de Tom Malzbender et al. décrite ci-dessus, la fonction de projection $\pi$ de l'invention n'est pas une fonction de projection orthographique mais une fonction de projection paraboloïde.

Le procédé selon l'invention utilise une fonction de projection paraboloïde tel que défini par Wolfgang Heidrich and Hans-Peter Seidel dans "View-independent environment maps - HWWS '98", pages 39 et suivantes, New York, NY, USA, 1998, ACM.

Le choix d'une fonction de projection paraboloïde présente l'avantage d'améliorer les résultats de l'approximation notamment lorsque la lumière est rasante.

Le procédé selon l'invention se différencie également de la technique d'approximation de Tom Malzbender et al. par d'autres aspects.

Un de ces aspects concerne la direction de la lumière projetée.

Dans la technique de Tom Malzbender et al. c'est le vecteur direction de la lumière qui est projeté alors que dans le procédé selon l'invention c'est un vecteur $\vec{H}$ qui est projeté. Ce vecteur $\vec{H}$ est un vecteur médian entre le vecteur $\vec{V}$ représentatif de la direction du point de vue et le vecteur $\vec{L}$ représentatif de la direction de la lumière, c'est-à-dire :

$$\vec{H} = \frac{\vec{V}+\vec{L}}{\left\| \vec{V}+\vec{L} \right\|}$$

avec,

- $\vec{V}$, vecteur représentatif de la direction du point de vue passant par le pixel p donné et le point de vue v donné,
- $\vec{L}$, vecteur représentatif de la direction de la lumière passant par le pixel p donné et un point de provenance du rayon lumineux considéré,
- $\|\|$ est l'opérateur "norme" de mesure de longueur d'un vecteur.

L'approximation polynomiale permet de réduire la taille de l'ensemble des textures de la fonction BTF à laquelle elle est appliquée. Comme son nom l'indique, il sagit d'une approximation par conséquent elle ne permet pas de conserver toutes les spécificités de la fonction BTF. Par exemple, les effets de spécularité ou certains effets d'ombrage ne sont pas ou sont mal représentés par une approximation polynomiale. La spécularité correspond au cas où le réfléchissement de la lumière en un point est plus important pour une direction de la lumière que pour les autres directions pour lesquelles il est à peu près constant. Les effets d'ombrage sont des effets liés à la géométrie du matériau.

Ces pertes liées à l'approximation, encore appelées "résidu", sont définies par :

$$R_{p,v}(\theta_l, \Phi_l) = BTF_{p,v}(\theta_l, \Phi_l) - Q_{p,v}(\pi(\theta_l, \Phi_l)).$$

$R_{p,v}(\theta_l, \Phi_l)$ est le résidu (en un pixel p donné, pour un point de vue v donné pour toutes les directions l de la lumière de coordonnées polaires ($\theta_l, \Phi_l$)) de l'approximation polynomiale de la fonction $BTF_{p,v}(\theta_l, \Phi_l)$ définie pour les mêmes paramètres. Il s'agit donc de la différence entre la fonction BTF avant approximation, $BTF_{p,v}(\theta_l, \Phi_l)$. et le polynôme $Q_{p,v}(\pi(\theta_l, \Phi_l))$ résultat de l'approximation.

La sous étape suivante E22 du procédé de l'invention est une étape d'approximation géométrique du résidu.

Un des buts de l'étape E22 est de minimiser les erreurs liées à l'approximation polynomiale de l'étape précédente E21 et représentées par le résidu. Cette étape permet d'enrichir l'approximation polynomiale en traitant certaines directions de la lumière qui ne sont pas ou sont mal représentées (spécularité, ombrage, etc.) par l'approximation polynomiale et qui contribuent au réalisme de la représentation du matériau.

Ces directions de la lumière qui génèrent un résidu important sont différentes d'un pixel à l'autre.

Dans un souci de réduction de la taille des données, il n'est pas possible de retenir toutes les directions de la lumière. Dans le même souci, il n'est pas possible de retenir les directions de la lumière qui génèrent un résidu pour chacun des pixels ce qui reviendrait plus ou moins à retenir toutes les directions de la lumière. On convient donc de retenir un nombre prédéfini de directions de la lumière communes à tous les pixels. Dans l'exemple de mise en oeuvre de l'invention cité plus haut, le nombre de directions de la lumière s'élève à 81. Le nombre prédéfini de directions retenues est égal à 13.

Pour minimiser les erreurs liées à l'approximation polynomiale de l'étape E21, on choisit d'effectuer une approximation géométrique du résidu par un maillage d'approximation.

Un résidu peut être interprété géométriquement par un espace à 2,5 dimensions encore appelé surface d'élévation. Cet espace à 2,5 dimensions correspond à un maillage à deux dimensions (obtenu suite à la projection paraboloïde $\pi$ de l'espace à trois dimensions formé par les directions de la lumière triangulées vers un espace à deux dimensions) muni d'une élévation en chaque point représentant le résidu.

On appelle maillage d'origine le maillage correspondant à la projection de toutes les directions de la lumière (81 dans l'exemple de mise en oeuvre cité). On appelle maillage d'approximation le maillage correspondant à la projection des directions de la lumière choisies (13 dans le même exemple de mise en oeuvre cité).

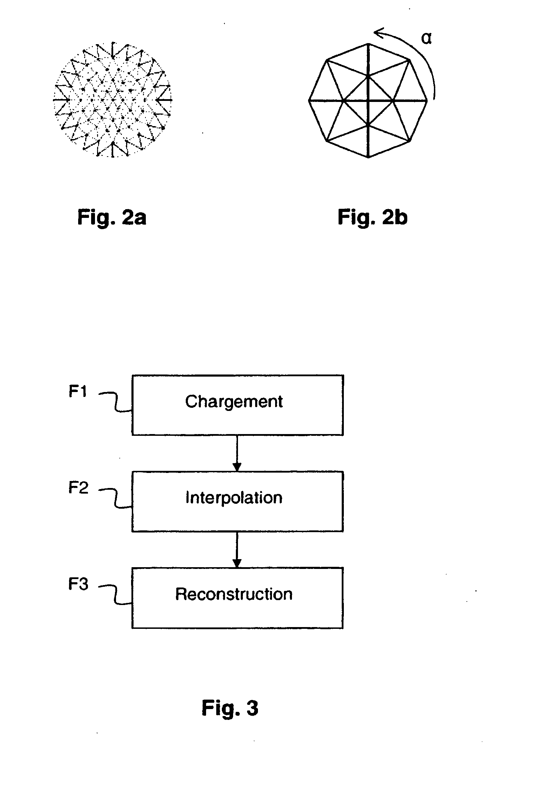

Les **figures 2a** et **2b** représentent respectivement un maillage d'origine et un maillage d'approximation.

Les points intermédiaires entre le maillage d'origine et le maillage d'approximation qui correspondent aux directions de la lumière non retenues sont calculés par interpolation barycentrique.

Les directions de la lumière choisies pour définir le maillage d'approximation sont telles que le maillage d'approximation obtenu est le plus représentatif géométriquement du maillage d'origine en deux dimensions. Ces directions de la lumière ne correspondent pas forcément au résidu le plus important pour un pixel donné. Pour prendre en compte cet aspect, on introduit un paramètre a représenté à la figure 2b et correspondant à un angle de rotation du maillage d'approximation autour de son centre, tel que $\alpha \in \left[0; \dfrac{\pi}{2}\right[$.

Cette rotation permet de mieux faire coïncider le maillage d'approximation avec les directions de la lumière pour lesquelles le résidu est important et figurant sur le maillage d'origine. L'approximation géométrique du résidu par le maillage d'approximation revient à identifier l'angle de rotation $\alpha$ pour lequel l'erreur entre le maillage d'origine et le maillage d'approximation est minimale au sens des moindres carrés.

Les zones homogènes d'un matériau présentent une grande cohérence spatiale (une grande similarité entre deux pixels voisins) ce qui signifie que les angles $\alpha$ de rotation pour deux pixels voisins doivent être proches. Une différence trop importante entre les angles de rotation $\alpha$ calculés pour deux pixels voisins engendre des différences visuelles importantes. Ces différences visuelles sont dues au sous-échantillonnage du maillage d'approximation par rapport au maillage d'origine.

Pour tenir compte de la similarité entre pixels voisins, on calcule l'angle de rotation pour un pixel donné par une analyse multi-résolution contrainte.

L'analyse multi-résolution implique de définir le résidu pour plusieurs niveaux de résolution. Le résidu pouvant être assimilé à une texture (ensemble de données), on choisit d'utiliser une décomposition en ondelettes classique pour définir le résidu pour les différents niveaux de résolution. Ce type de décomposition est dyadique, c'est-à-dire que la taille de la texture d'un niveau de résolution à l'autre varie d'un facteur 2.

La contrainte est introduite dans le calcul de l'angle de rotation. Pour calculer l'angle de rotation à un niveau de résolution donné, on tient compte de l'angle de rotation obtenu au niveau de résolution précédent.

On décrit à présent le calcul de l'angle de rotation par une analyse multi-résolution contrainte pour n niveaux de résolution, le niveau 0 étant le niveau de résolution le plus grossier et le niveau n étant le niveau de résolution le plus fin.

On rappelle que $R_{p,v}(\theta_l, \Phi_l)$ est le résidu en un pixel p donné pour un point de vue v donné pour toutes les directions l de la lumière de coordonnées polaire $(\theta_l, \Phi_l)$ obtenu à l'issue de l'étape E21 d'approximation de la fonction $BTF_v$.

Au niveau de résolution r, tel que $0 \leq r \leq n$, $R_{p,v}^r(\theta_l, \Phi_l)$ est le résidu obtenu en un pixel p donné pour un point de vue v donné pour toutes les directions l de la lumière de coordonnées polaires $(\theta_l, \Phi_l)$.

On convient de noter $\tilde{R}_{p,v}^r(\theta_l, \Phi_l, \alpha_p^r)$ l'approximation géométrique du résidu $R_{p,v}^r(\theta_l, \Phi_l)$ au niveau de résolution r.

L'analyse multi-résolution contrainte débute au niveau résolution le plus grossier, soit le niveau 0.

On calcule l'ensemble des $\alpha_p^0$ de telle sorte que l'on minimise l'erreur quadratique entre le résidu $R_{p,v}^0$ et l'approximation géométrique du résidu $\tilde{R}_{p,v}^0$. On calcule l'ensemble des $\alpha_p^0$ de façon à obtenir :

$$(R_{p,v}^0(\theta_l, \Phi_l) - \tilde{R}_{p,v}^0(\theta_l, \Phi_l, \alpha_p^0))^2 = 0.$$

L'analyse se poursuit vers les niveaux supérieurs. Ainsi, au niveau de résolution r, tel que $0 \leq r \leq n$, on cherche à obtenir :

$$(R_{p,v}^r(\theta_l,\Phi_i) - \tilde{R}_{p,v}^r(\theta_l,\Phi_l,\alpha_p^r))^2 = 0.$$

avec

$$\alpha_p^{r-1} - c^r \le \alpha_p^r \le \alpha_p^{r-1} + c^r$$

où $C^r$ est une contrainte définie pour chaque niveau r = l,..., n par rapport à $C^0$ de telle sorte que

$$c^0 = \frac{c^1}{2} = ... = \frac{c^{n-1}}{2^{n-1}} = \frac{c^n}{2^n} \text{ et } c^0 \in \left[0; \frac{\pi}{4}\right[.$$

L'initialisation de $C^0$ permet de contraindre plus ou moins le système. Plus $C^0$ est grand, moins le système est contraint.

A la fin de l'analyse, à chaque pixel p correspond un angle de rotation $\alpha_p$ associé au maillage d'approximation du résidu et une approximation géométrique du résidu notée $\vec{R}_{p,v}(\theta_l,\Phi_l,\alpha_p)$.

Les étapes E21 et E22 sont réalisées pour chacun des pixels pris séparément. On réunit ensuite les résultats de ces deux étapes pour l'ensemble des pixels.

En référence à la figure 1, à l'issue de l'étape E2 de factorisation, on dispose d'une approximation polynomiale de la fonction BTF d'origine et d'une approximation géométrique du résidu correspondant, pour un point de vue donné, pour l'ensemble des directions de la lumière et pour tous les pixels.

L'approximation polynomiale de la fonction BTF d'origine permet de réduire de manière significative (d'un facteur 10 environ) la taille de la texture (ou ensemble des données) de cette fonction. L'approximation du résidu permet d'obtenir des données voisines des données d'origine pour assurer une représentation réaliste du matériau.

L'étape suivante E3 d'un procédé de représentation d'un matériau selon l'invention est une étape de simplification.

Un des buts de cette étape est de réduire la quantité des données issues de l'étape E2 de factorisation en ne gardant que les données essentielles à une représentation réaliste du matériau considéré.

Pour cela, on exploite les redondances présentes dans la fonction BTF après factorisation. Ces redondances correspondent notamment aux similitudes qui peuvent exister entre un pixel et ses voisins.

Pour réaliser l'étape E3 de simplification on utilise la technique de décomposition en paquets d'ondelettes.

De manière générale, une décomposition en paquets d'ondelettes permet de projeter un ensemble de données dans un espace d'analyse adéquat pour en extraire les éléments les plus significatifs.

En l'occurrence, l'application de la technique de décomposition en paquets d'ondelettes pour la mise en oeuvre de l'étape de simplification conduit à considérer les données issues de la factorisation selon deux ensembles de données.

Un premier ensemble de données contient les coefficients des polynômes obtenus à l'étape E21 et représentant l'approximation polynomiale de la fonction BTF par point de vue notée $BTF_v$. Il y a six coefficients par pixel.

Un deuxième ensemble de données contient les élévations des maillages d'approximation ainsi que les angles de rotation associés obtenus à l'étape E22 et représentant l'approximation géométrique du résidu. Il y a quatorze coefficients par pixel.

La décomposition en paquets d'ondelettes est réalisée sur ces deux ensembles de données.

L'application de la technique de décomposition en paquets d'ondelettes consiste à décomposer les données considérées en sous-bandes.

Chaque sous-bande comporte un ensemble de coefficients d'ondelettes.

Pour une image, un coefficient d'ondelette est une information spatiale et fréquentielle qui représente la différence entre un pixel et ses voisins.

On distingue deux types de coefficients d'ondelettes : les coefficients d'approximation et les coefficients de détail.

Les coefficients d'approximation définissent une image à un niveau de résolution donné, inférieur au niveau de résolution d'origine.

Les coefficients de détail représentent la différence entre deux niveaux de résolution. Les coefficients de détail permettent de passer d'un niveau de résolution à un niveau de résolution supérieur, le passage se faisant du niveau de résolution le plus fin vers le niveau de résolution le plus grossier.

Un coefficient de détail est nul si deux pixels voisins sont identiques.

Chacun des deux ensembles de données identifiés ci-dessus est découpé en sous-bandes $\Omega_j^i$

où

- i représente le niveau de décomposition,
- j représente l'indice d'une sous-bande et varie de 0 à 4'.

Pour chaque sous-bande, les coefficients d'ondelettes sont définis par deux fonctions d'énergie $E_Q$ et $E_{\tilde{R}}$, respectivement pour l'approximation polynomiale Q et pour l'approximation géométrique du résidu $\tilde{R}$.

La fonction d'énergie est la somme des carrés des coefficients d'ondelettes générés par une approximation (approximation polynomiale ou approximation géométrique) pour l'ensemble des directions de la lumière et pour un point de vue donné.

Les deux fonctions d'énergie $E_Q$ et $E_{\tilde{R}}$ sont définies par :

$$E_Q(\Omega_j^i) = \sum_{(x,y)\in\Omega_j^i} \left( \sum_{(\theta_l,\Phi_l)} Q^2(x,y,\pi(\theta_l,\Phi_l)) \right)$$

et

$$E_{\tilde{R}}(\Omega_j^i) = \sum_{(x,y)\in\Omega_j^i} \left( \sum_{(\theta_l,\Phi_l)} \tilde{R}^2(x,y,\pi(\theta_l,\Phi_l)) \right)$$

avec

$$E(\Omega_0^0) = \sum_{j=0}^{4^i} \left( E_Q(\Omega_j^i) + E_{\tilde{R}}(\Omega_j^i) \right), \forall i$$

où E est l'énergie totale de la BTF factorisée. Une des propriétés de la décomposition en ondelettes est que cette énergie est constante quel que soit le niveau de décomposition i.

On considère à présent les fonctions d'énergie normalisées $\overline{E}_Q$ et $\overline{E}_{\tilde{R}}$.

Ces fonctions sont telles que :

$$\overline{E}_Q(\Omega_0^0) = \overline{E}_{\tilde{R}}(\Omega_0^0) = 1$$

On obtient alors pour l'énergie totale normalisée de la fonction BTF factorisée :

$$\overline{E}(\Omega_0^0) = \frac{\sum_{j=0}^{4^i} \left( \overline{E}_Q(\Omega_j^i) + \overline{E}_{\tilde{R}}(\Omega_j^i) \right)}{2} = 1, \forall i.$$

Les fonctions d'énergie et les fonctions d'énergie normalisées permettent pour l'ensemble de la représentation du matériau considéré (approximation polynomiale et approximation géométrique du résidu) de trier les sous-bandes par ordre d'importance. Plus l'énergie d'une sous-bande est grande et plus cette sous-bande est importante.

Un critère de simplification peut être défini pour déterminer les sous-bandes à retenir selon deux approches :

- une approche qualitative
- une approche quantitative.

Selon l'approche qualitative, on fixe un seuil $\tau$ tel que $\overline{E}(\Omega_0^0) = \tau$, avec $\tau \in ]0;1]$. On conserve les sous-bandes par ordre décroissant d'importance jusqu'à atteindre le seuil $\tau$.

Le seuil $\tau$ correspond au niveau d'erreur que l'on introduit dans la représentation. Par exemple, pour $\tau = 0,5$, la représentation est 2 fois plus dégradée que pour $\tau = 1$ (pas de simplification) et pour $\tau = 0,1$, la représentation est 10 fois plus dégradée que pour $\tau = 1$.

Selon l'approche quantitative, on fixe un nombre N correspondant à la taille de la représentation. Par exemple, si on a 10 Mo (méga octets) disponibles en mémoire, on conserve les sous-bandes par ordre décroissant d'importance de telle sorte que la taille des sous-bandes gardées soit égale à 10 Mo.

En considérant les sous-bandes les unes après les autres par ordre décroissant d'importance, l'étape E3 de simplification consiste à retenir les sous-bandes considérées tant que le critère de simplification n'est pas atteint.

Les sous-bandes "retenues" sont celles ayant le plus d'importance dans la représentation c'est-à-dire celles qui correspondent aux régions les moins uniformes du matériau. A l'inverse, les sous-bandes "non retenues" sont celles qui correspondent aux régions uniformes du matériau, c'est-à-dire les régions pour lesquelles un pixel et ses voisins se ressemblent le plus.

Au cours de l'étape E3, une carte de présence est également renseignée.

Cette carte de présence est une texture (ensemble de données) comportant des 0 ou des 1 selon que la sous-bande correspondante est retenue ou non, c'est-à-dire selon que cette sous-bande est dans la représentation ou non.

Par exemple, au niveau 1 de décomposition, on a 4 sous bandes. La carte de présence est donc une texture de taille 2 x 2 = 4 où un 0 (respectivement un 1) détermine si la sous bande est "non retenue" (respectivement "retenue").

A l'issue de l'étape E3, on dispose, par point de vue d'une carte de présence et d'un ensemble de sous-bandes retenues définies par des coefficients d'ondelettes.

Les coefficients d'ondelettes des sous-bandes retenues permettent de reconstituer les données à partir desquelles ils ont été obtenus, à savoir l'approximation polynomiale de la fonction BTF par point de vue, notée BTF$_V$, et l'approximation géométrique du résidu correspondant.

Ces données correspondent à la représentation pour un point de vue donné du matériau considéré.

L'étape E3 d'un procédé de représentation d'un matériau selon l'invention est suivie d'une étape E4 d'assemblage.

Les étapes E2 et E3 ont été réalisées pour un point de vue donné, pour l'ensemble des pixels (ou points) du matériau, constituant ainsi une texture pour l'ensemble des directions de la lumière.

Les étapes E2 et E3 sont reproduites de la même façon pour l'ensemble des points de vue.

L'étape E4 d'assemblage comporte le regroupement de toutes les données pour l'ensemble des points de vue.

Ces données sont les coefficients d'ondelettes des sous-bandes retenues au cours de l'étape E3 de simplification et les cartes de présence.

A l'issue de l'étape E4 d'assemblage, on dispose de la représentation du matériau considéré. Il s'agit d'une fonction BTF que l'on convient de noter $\widetilde{BTF}(x,y,\theta_V,\Phi_V,\theta_I,\Phi_I)$ très proche de la fonction BTF d'origine (notée $BTF(x,y,\theta_V,\Phi_V,\theta_I,\Phi_I)$) et plus compacte que cette fonction d'origine.

Le procédé de représentation d'un matériau selon l'invention est décrit ci-dessus pour un mode de réalisation selon lequel la fonction d'origine est une fonction BTF. En variante, l'interaction entre une source de lumière et le matériau considéré est modélisée par une fonction SVBRDF d'origine. Le procédé est alors identique en remplaçant la fonction BTF par une fonction SVBRDF.

L'invention concerne également un procédé de rendu d'un matériau sur un matériel graphique.

La **figure 3** représente un organigramme d'un procédé de rendu d'un matériau selon l'invention.

On peut considérer deux types de rendu : un rendu "hardware" sur du matériel graphique ou rendu GPU (pour *Graphical Process Unit* en anglais) et un rendu "software" sur des processeurs classiques ou rendu CPU (pour *Central Processing Unit* en anglais).

Le rendu GPU possède des propriétés particulières. Ces propriétés impliquent le respect de certaines règles qui rendent difficile la transposition d'un procédé conçu pour un rendu CPU vers un rendu GPU. A l'inverse, un procédé conçu pour un rendu GPU est transposable pour un rendu CPU.

Une des propriétés particulières du rendu GPU est le parallélisme. Cette propriété implique que deux processus ne sont pas exécutés séquentiellement, c'est-à-dire l'un après l'autre, mais parallèlement, c'est-à-dire l'un et l'autre en même temps.

Sur les processeurs graphiques actuels, il est possible de réaliser jusqu'à 128 processus en parallèle. Le gain de performance d'un rendu GPU par rapport à un rendu CPU s'élève en théorie à 128.

Il est également possible de faire du parallélisme pour un rendu CPU mais avec une nettement moins bonne performance.

Il est donc plus avantageux de recourir à un rendu GPU qu'à un rendu CPU notamment pour ces raisons de performance.

Le procédé de représentation d'un matériau selon l'invention est adapté pour un rendu GPU et un rendu CPU. Pour un pixel donné, pour un point de vue donné et pour une direction de la lumière donnée, on peut reconstruire le matériau correspondant à ces valeurs. Une telle reconstruction peut être réalisée en parallèle pour les pixels du matériau.

Une première étape F1 de chargement permet de charger, dans la mémoire vidéo d'un matériel graphique, les données issues d'un procédé de représentation d'un matériau tel que celui décrit ci-dessus.

L'étape de chargement est réalisée en une seule fois alors que les étapes suivantes du procédé de rendu sont réalisées lors de l'affichage d'une image.

Les données chargées sont organisées par point de vue et comportent pour un point de vue donné une carte de présence et les coefficients d'ondelettes des sous-bandes retenues.

De la même façon que le procédé de représentation du matériau considéré est effectué par point de vue, le procédé de rendu de ce matériau est effectué par point de vue, désigné par point de vue de rendu et noté $v_r$.

Le procédé de représentation décrit ci-dessus utilise un nombre discret de points de vue (81 dans l'exemple de mise en oeuvre cité). Or, le rendu peut nécessiter de considérer d'autres points de vue que ceux utilisés pour la représentation.

Au cours d'une deuxième étape F2, on effectue une interpolation barycentrique du point de vue de rendu $v_r$.

Pour cela, on identifie, dans l'ensemble des points de vue utilisés pour la représentation, trois points de vue les plus proches ($v_i$, $v_j$, $v_k$) du point de vue de rendu $v_r$. On affecte un poids à chacun de ces trois points de vue, respectivement ($w_i$, $w_j$, $w_k$), représentatif de leur proximité.

L'étape suivante est une étape F3 de reconstruction.

Cette étape est effectuée séparément pour chacun des trois points de vue $v_i$, $v_j$ et $v_k$ identifiés suite à l'interpolation barycentrique du point de vue de rendu $v_r$.

Un point de vue étant fixé, l'étape de reconstruction permet de reconstituer un pixel correspondant à une direction de la lumière à partir de la carte de présence et des sous-bandes disponibles pour ce point de vue.

La reconstruction d'un pixel est réalisée par une transformée inverse en ondelettes des coefficients d'ondelettes des sous-bandes retenues au cours de l'étape E3 de simplification du procédé de représentation. Les sous-bandes retenues sont identifiées par la carte de présence lorsque celle-ci est renseignée à 1.

La reconstruction d'un pixel repose sur une propriété de la décomposition en paquets d'ondelettes qui est la propriété de localité. Cette propriété de localité permet, à partir du pixel considéré de déterminer les coefficients d'ondelettes associés. De par cette propriété, il n'est pas nécessaire d'effectuer la transformée inverse de tous les coefficients d'ondelettes pour reconstruire la texture mais seulement des coefficients d'ondelettes associés au pixel à reconstruire.

La reconstruction d'un pixel comprend la reconstitution du polynôme et du résidu tels qu'obtenus à l'issue de l'étape E2 de factorisation du procédé de représentation.

Le polynôme représente l'ensemble des directions de la lumière.

Le résidu ne représente que les directions de la lumière choisies pour définir un maillage d'approximation. Il est alors nécessaire de réaliser une interpolation pour passer d'un résidu défini pour certaines directions choisies de la lumière à l'ensemble des directions de la lumière.

A l'issue de l'étape F3 de reconstruction réalisée pour chacun des trois points de vue $v_i$, $v_j$ et $v_k$, on obtient trois fonctions BTF :

$$BTF_{v_i}(x,y,\theta_l,\Phi_l),$$

$$BTF_{v_j}(x,y,\theta_l,\Phi_l),$$

$$BTF_{v_k}(x,y,\theta_l,\Phi_l),$$

où

- $v_i$, $v_j$ et $v_k$ sont les 3 points de vue identifiés au cours de l'étape d'interpolation barycentrique,
- (x,y) sont les coordonnées d'un pixel d'une image et correspondent aux coordonnées spatiales d'un point à la

surface du matériau,

- $(\theta_l, \Phi_l)$, sont les coordonnées polaires d'une direction l de la lumière.

Ces fonctions BTF peuvent également s'exprimer de la façon suivante :

$$BTF_{v_i}(x,y,\theta_l,\Phi_l) \approx \widetilde{BTF}_{v_i}(x,y,\theta_l,\Phi_l) = Q_{v_i}(x,y,\theta_l,\Phi_l) + \tilde{R}_{v_i}(x,y,\theta_l,\Phi_l),$$

$$BTF_{v_j}(x,y,\theta_l,\Phi_l) \approx \widetilde{BTF}_{v_j}(x,y,\theta_l,\Phi_l) = Q_{v_j}(x,y,\theta_l,\Phi_l) + \tilde{R}_{v_j}(x,y,\theta_l,\Phi_l),$$

$$BTF_{v_k}(x,y,\theta_l,\Phi_l) \approx \widetilde{BTF}_{v_k}(x,y,\theta_l,\Phi_l) = Q_{v_k}(x,y,\theta_l,\Phi_l) + \tilde{R}_{v_k}(x,y,\theta_l,\Phi_l),$$

où

- $Q_{v_i}$, $Q_{v_j}$ et $Q_{v_k}$ sont les polynômes reconstitués pour respectivement les trois points de vue $v_i$, $v_j$ et $v_k$,
- $\tilde{R}_{v_i}$, $\tilde{R}_{v_j}$ et $\tilde{R}_{v_k}$ sont les résidus reconstitués pour respectivement les trois points de vue $v_i$, $v_j$ et $v_k$.

Pour le point de vue de rendu $v_r$, on obtient alors :

$$BTF_{v_r} \approx \widetilde{BTF}_{v_r} = w_i * \widetilde{BTF}_{v_i} + w_j * \widetilde{BTF}_{v_j} + w_k * \widetilde{BTF}_{v_k}.$$

On peut utiliser différents niveaux de détail pour réaliser le rendu du matériau considéré. Le niveau de détail utilisé dépend du plan dans lequel se trouve l'objet composé de ce matériau dans l'environnement virtuel considéré et pour lequel on effectue le rendu.

Plus l'objet se trouve dans un plan proche du premier plan de l'environnement virtuel pour lequel on effectue le rendu et plus le niveau de détail est élevé. A l'inverse, plus l'objet se trouve dans un plan proche de l'arrière plan et plus le niveau de détail est faible.

Les niveaux de détail sont utilisés pour éviter tout phénomène de recouvrement *(aliasing* en anglais) sur le matériau au fur et à mesure que l'objet s'éloigne du premier plan de l'environnement virtuel.

Le niveau de détail est calculé par des fonctions associées au matériel graphique utilisé.

Le niveau de détail induit le nombre de reconstructions à réaliser.

Ainsi pour le niveau de détail le plus grossier on ne reconstitue, pour le pixel considéré, que les coefficients d'approximation du polynôme.

Pour les niveaux de détail intermédiaires, on reconstitue les coefficients d'approximation et certains coefficients de détail du polynôme.

Pour le niveau de détail le plus fin, on reconstitue tous les coefficients du polynôme et on reconstitue également le résidu.

L'étape F3 de reconstruction tient compte du niveau de détail tel que décrit précédemment.

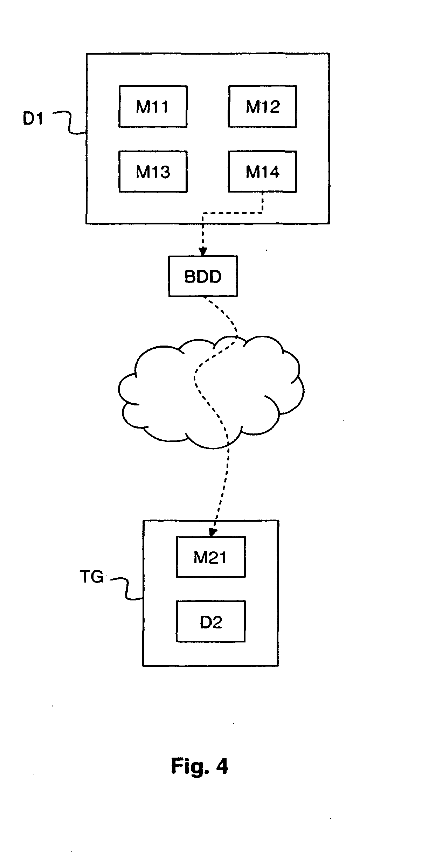

La **figure 4** illustre un système mettant en oeuvre un procédé de représentation et un procédé de rendu d'un matériau selon l'invention.

Le système comporte un dispositif D1 de représentation d'un matériau tel que représenté à la figure 4.

Le dispositif D1 comprend un module M11 de traitement adapté pour séparer par point de vue les données constitutives d'une fonction BTF (ou d'une fonction SVBRDF) d'origine de modélisation de l'interaction entre une source de lumière et le matériau considéré.

Ce module M11 met ainsi en oeuvre l'étape E1 du procédé de représentation d'un matériau décrit précédemment.

Le dispositif D1 comprend un module M12 de factorisation qui réalise l'approximation des données issues du module M11, tel que décrit à l'étape E2.

Le dispositif D1 comporte également un module M13 de simplification, qui par application d'une technique de décomposition en paquets d'ondelettes permet de réduire la quantité de données délivrées par le module M12.

Ce module M13 met ainsi en oeuvre l'étape E3 du procédé de représentation d'un matériau décrit précédemment.

Le dispositif D1 comprend en outre un module M 14 d'assemblage qui met en oeuvre l'étape E4 décrite précédemment. Le module M14 d'assemblage fournit en sortie la représentation du matériau considéré.

Le dispositif D1 comprend en outre une unité centrale de commande, non représentée, connectée à chacun des modules M11 à M14 et adaptée pour commander leur fonctionnement.

Le système comporte également une base de données BDD dans laquelle peut être enregistrée la représentation du matériau obtenue en sortie du module M14.

Le système comporte aussi un terminal graphique TG qui peut consulter la base de données BDD au travers d'un réseau RES.

Le terminal graphique TG comprend un module M21 de chargement de données enregistrées dans la base de données BDD.

Le terminal graphique TG comporte un dispositif D2 de rendu d'un matériau tel que représenté à la figure 4. Ce dispositif D2 comprend des moyens de reconstruction pour la reconstitution d'une approximation polynomiale de la fonction BTF d'origine et la reconstitution d'une approximation géométrique d'un résidu résultant de la différence entre la fonction BTF d'origine et l'approximation polynomiale de cette fonction

Le dispositif D2 réalise les étapes F2 à F3 du procédé de rendu selon l'invention tel que décrit ci-dessus.

Les modules M11 à M14 du dispositif D1 peuvent être des modules logiciels formant un programme d'ordinateur. L'invention concerne donc également un programme d'ordinateur pour un dispositif D1 de représentation d'un matériau comprenant des instructions logicielles pour faire exécuter par le dispositif le procédé de représentation d'un matériau précédemment décrit. Le programme d'ordinateur peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

Le module M21 et le dispositif D2 peuvent être des modules logiciels formant un programme d'ordinateur.

L'invention concerne donc également un programme d'ordinateur pour un module M21. L'invention concerne aussi un programme d'ordinateur pour un dispositif D2 de rendu d'un matériau comprenant des instructions logicielles pour faire exécuter par le dispositif le procédé de rendu d'un matériau précédemment décrit. Le programme d'ordinateur peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

L'invention concerne également un terminal graphique tel que le terminal TG. Il peut notamment s'agir d'un ordinateur ou d'une console de jeux.

## Revendications

1. Procédé de représentation d'une texture d'un objet par approximation d'une fonction d'origine de modélisation de l'interaction de la lumière émise par une source de lumière et le matériau, laquelle fonction est définie en fonction des pixels, des points de vue et des directions de la lumière, **caractérisé en ce qu'**il comporte :

   - par point de vue, des étapes d'approximation polynomiale (E21) de la fonction de modélisation d'origine et d'approximation géométrique (E22) selon un nombre prédéfini de directions de la lumière, d'un résidu résultant de la différence entre la fonction de modélisation d'origine et l'approximation polynomiale de cette fonction,
   - une étape de simplification (E3) par décomposition en paquets d'ondelettes des résultats obtenus à l'issue des deux approximations.

2. Procédé de représentation selon la revendication 1, **caractérisé en ce que** la fonction de modélisation d'origine est une fonction BTF *(Bidirectional Texture Function)* ou une fonction SVBRDF *(Spatially-Varying Bidirectional Reflectance Distribution Function).*

3. Procédé de représentation selon la revendication 1 **caractérisé en ce que** l'étape d'approximation polynomiale (E21) de la fonction de modélisation d'origine est réalisée à partir d'un maillage d'origine résultant d'une projection paraboloïde d'un espace à trois dimensions dans un espace à deux dimensions de vecteurs médians obtenus à partir d'un vecteur représentatif de la direction du point de vue et de vecteurs représentatifs respectivement de chacune des directions de la lumière.

**4.** Procédé de représentation selon la revendication 1, **caractérisé en ce que** l'étape d'approximation géométrique (E22) du résidu est réalisée à partir d'un maillage d'approximation résultant d'une projection paraboloïde d'un espace à trois dimensions dans un espace à deux dimensions de vecteurs médians obtenus à partir d'un vecteur représentatif de la direction du point de vue et de vecteurs représentatifs respectivement de directions choisies parmi les directions de la lumière.

**5.** Procédé de représentation selon la revendication 1, **caractérisé en ce que** l'étape de simplification (E3) par décomposition en paquets d'ondelettes de l'approximation polynomiale de la fonction de modélisation d'origine et de l'approximation géométrique du résidu comporte l'obtention de sous-bandes composées de coefficients d'approximation et de coefficients de détail.

**6.** Procédé de représentation selon la revendication 5 **caractérisé en ce que**, par application d'un critère de simplification, des sous-bandes sont sélectionnées parmi les sous-bandes obtenues et, lorsqu'une sous-bande est sélectionnée, une carte de présence est renseignée.

**7.** Procédé de rendu d'une représentation d'une texture d'un objet obtenue par approximation d'une fonction d'origine de modélisation de l'interaction de la lumière émise par une source de lumière et le matériau, laquelle fonction est définie en fonction des pixels, des points de vue et des directions de la lumière, **caractérisé en ce qu'**il comporte :

- une étape de reconstruction (F3) comprenant la reconstitution d'une approximation polynomiale de la fonction de modélisation d'origine et la reconstitution d'une approximation géométrique, selon un nombre prédéfini de directions de la lumière, d'un résidu résultant de la différence entre la fonction de modélisation d'origine et l'approximation polynomiale de cette fonction.

**8.** Dispositif de représentation d'une texture d'un objet par approximation d'une fonction d'origine de modélisation de l'interaction de la lumière émise par une source de lumière et le matériau, laquelle fonction est définie en fonction des pixels, des points de vue et des directions de la lumière, **caractérisé en ce qu'**il comporte :

- un module (M12) de factorisation réalisant, par point de vue, une approximation polynomiale de la fonction de modélisation d'origine et une approximation géométrique selon un nombre prédéfini de directions de la lumière, d'un résidu résultant de la différence entre la fonction de modélisation d'origine et l'approximation polynomiale de cette fonction,
- un module (M13) de simplification des résultats obtenus en sortie du module de factorisation.

**9.** Dispositif de rendu d'une représentation d'une texture d'un objet obtenue par approximation d'une fonction d'origine de modélisation de l'interaction de la lumière émise par une source de lumière et le matériau, laquelle fonction est définie en fonction des pixels, des points de vue et des directions de la lumière, **caractérisé en ce qu'**il comporte :

- des moyens de reconstruction pour la reconstitution d'une approximation polynomiale de la fonction de modélisation d'origine et la reconstitution d'une approximation géométrique selon un nombre prédéfini de directions de la lumière, d'un résidu résultant de la différence entre la fonction de modélisation d'origine et l'approximation polynomiale de cette fonction.

**10.** Programme d'ordinateur **caractérisé en ce qu'**il comporte des instructions pour l'exécution des étapes d'un procédé de représentation d'une texture d'un objet par approximation d'une fonction d'origine de modélisation de l'interaction de la lumière émise par une source de lumière et le matériau, laquelle fonction est définie en fonction des pixels, des points de vue et des directions de la lumière selon l'une quelconque des revendications 1 à 6 lorsque le programme est exécuté sur un ordinateur.

**11.** Programme d'ordinateur **caractérisé en ce qu'**il comporte des instructions pour l'exécution des étapes d'un procédé de rendu d'une représentation d'une texture d'un objet obtenue par approximation d'une fonction d'origine de modélisation de l'interaction de la lumière émise par une source de lumière et le matériau, laquelle fonction est définie en fonction des pixels, des points de vue et des directions de la lumière selon la revendication 7 lorsque le programme est exécuté sur un ordinateur.

**12.** Terminal graphique comprenant un dispositif de rendu selon la revendication 9.

**Patentansprüche**

1. Verfahren zur Darstellung einer Textur eines Gegenstands durch Approximation einer Ursprungsmodellierungsfunktion der Wechselwirkung zwischen dem von einer Lichtquelle emittierten Licht und dem Material, wobei die Funktion abhängig von den Pixeln, den Standpunkten und den Richtungen des Lichts definiert wird, **dadurch gekennzeichnet, dass** es aufweist:

   - pro Standpunkt, Schritte der polynomialen Approximation (E21) der Ursprungsmodellierungsfunktion und der geometrischen Approximation (E22), gemäß einer vordefinierten Anzahl von Richtungen des Lichts, eines aus der Differenz zwischen der Ursprungsmodellierungsfunktion und der polynomialen Approximation dieser Funktion resultierenden Rests,
   - einen Schritt der Vereinfachung (E3) durch Zerlegung in Wavelet-Pakete der nach den zwei Approximationen erhaltenen Ergebnisse.

2. Darstellungsverfahren nach Anspruch 1, **dadurch gekennzeichnet, dass** die Ursprungsmodellierungsfunktion eine BTF-Funktion (Bidirectional Texture Function) oder eine SVBRDF-Funktion (Spatially-Varying Bidirectional Reflectance Distribution Function) ist.

3. Darstellungsverfahren nach Anspruch 1, **dadurch gekennzeichnet, dass** der Schritt der polynomialen Approximation (E21) der Ursprungsmodellierungsfunktion ausgehend von einer Ursprungsvernetzung durchgeführt wird, die aus einer paraboloiden Projektion von einem dreidimensionalen Raum in einen zweidimensionalen Raum von Mittelvektoren resultiert, die ausgehend von einem für die Richtung des Standpunkts repräsentativen Vektor und von für jede der Richtungen des Lichts repräsentativen Vektoren erhalten werden.

4. Darstellungsverfahren nach Anspruch 1, **dadurch gekennzeichnet, dass** der Schritt der geometrischen Approximation (E22) des Rests ausgehend von einer Approximationsvernetzung durchgeführt wird, die aus einer paraboloiden Projektion von einem dreidimensionalen Raum in einen zweidimensionalen Raum von Mittelvektoren resultiert, die ausgehend von einem für die Richtung des Standpunkts repräsentativen Vektor und von für gewählte Richtungen unter den Richtungen des Lichts repräsentativen Vektoren erhalten werden.

5. Darstellungsverfahren nach Anspruch 1, **dadurch gekennzeichnet, dass** der Schritt der Vereinfachung (E3) durch Zerlegung in Wavelet-Pakete der polynomialen Approximation der Ursprungsmodellierungsfunktion und der geometrischen Approximation des Rests den Erhalt von aus Approximationskoeffizienten und Detailkoeffizienten bestehenden Teilbändern aufweist.

6. Darstellungsverfahren nach Anspruch 5, **dadurch gekennzeichnet, dass** durch Anwendung eines Vereinfachungskriteriums Teilbänder unter den erhaltenen Teilbändern ausgewählt werden, und wenn ein Teilband ausgewählt ist, eine Präsenzkarte ausgefüllt wird.

7. Verfahren zur Wiedergabe einer Darstellung einer Textur eines Gegenstands, die durch Approximation einer Ursprungsmodellierungsfunktion der Wechselwirkung zwischen dem von einer Lichtquelle emittierten Licht und dem Material erhalten wird, wobei die Funktion abhängig von den Pixeln, den Standpunkten und den Richtungen des Lichts definiert wird, **dadurch gekennzeichnet, dass** es aufweist:

   - einen Rekonstruktionsschritt (F3), der die Wiederherstellung einer polynomialen Approximation der Ursprungsmodellierungsfunktion und die Wiederherstellung einer geometrischen Approximation, gemäß einer vordefinierten Anzahl von Richtungen des Lichts, eines Rests enthält, der aus der Differenz zwischen der Ursprungsmodellierungsfunktion und der polynomialen Approximation dieser Funktion resultiert.

8. Vorrichtung zur Darstellung einer Textur eines Gegenstands durch Approximation einer Ursprungsmodellierungsfunktion der Wechselwirkung zwischen dem von einer Lichtquelle emittierten Licht und dem Material, wobei die Funktion abhängig von den Pixeln, den Standpunkten und den Richtungen des Lichts definiert wird, **dadurch gekennzeichnet, dass** sie aufweist:

   - ein Faktorisierungsmodul (M12), das pro Standpunkt eine polynomiale Approximation der Ursprungsmodellierungsfunktion und eine geometrische Approximation, gemäß einer vorbestimmten Anzahl von Richtungen des Lichts, eines Rests durchführt, der aus der Differenz zwischen der Ursprungsmodellierungsfunktion und der polynomialen Approximation dieser Funktion resultiert,

- ein Vereinfachungsmodul (M13) der am Ausgang des Faktorisierungsmoduls erhaltenen Ergebnisse.

9. Wiedergabevorrichtung einer Darstellung einer Textur eines Gegenstands, die durch Approximation einer Ursprungsmodellierungsfunktion der Wechselwirkung zwischen dem von einer Lichtquelle emittierten Licht und dem Material erhalten wird, wobei die Funktion abhängig von den Pixeln, den Standpunkten und den Richtungen des Lichts definiert wird, **dadurch gekennzeichnet, dass** sie aufweist:

   - Rekonstruktionseinrichtungen zur Wiederherstellung einer polynomialen Approximation der Ursprungsmodellierungsfunktion und zur Wiederherstellung einer geometrischen Approximation, gemäß einer vordefinierten Anzahl von Richtungen des Lichts, eines Rests, der aus der Differenz zwischen der Ursprungsmodellierungsfunktion und der polynomialen Approximation dieser Funktion resultiert.

10. Computerprogramm, **dadurch gekennzeichnet, dass** es Anweisungen zur Ausführung der Schritte eines Verfahrens zur Darstellung einer Textur eines Gegenstands durch Approximation einer Ursprungsmodellierungsfunktion der Wechselwirkung zwischen dem von einer Lichtquelle emittierten Licht und dem Material, wobei die Funktion abhängig von den Pixeln, den Standpunkten und den Richtungen des Lichts definiert wird, nach einem der Ansprüche 1 bis 6 aufweist, wenn das Programm in einem Computer ausgeführt wird.

11. Computerprogramm, **dadurch gekennzeichnet, dass** es Anweisungen zur Ausführung der Schritte eines Verfahrens zur Wiedergabe einer Darstellung einer Textur eines Gegenstands, die durch Approximation einer Ursprungsmodellierungsfunktion der Wechselwirkung zwischen dem von einer Lichtquelle emittierten Licht und dem Material erhalten wird, wobei die Funktion abhängig von den Pixeln, den Standpunkten und den Richtungen des Lichts definiert wird, nach Anspruch 7 aufweist, wenn das Programm in einem Computer ausgeführt wird.

12. Grafisches Endgerät, das eine Wiedergabevorrichtung nach Anspruch 9 enthält.

**Claims**

1. Method for representing a texture of an object by approximating an original function modelling the interaction between light emitted by a light source and the material, which function is defined on the basis of pixels, points of view and directions of the light, **characterized in that** it comprises:

   - per point of view, steps of polynomial approximation (E21) of the original modelling function and of geometric approximation (E22) according to a predefined number of directions of the light, of a residue that results from the difference between the original modelling function and the polynomial approximation of said function,
   - a step of simplification (E3) by decomposing into wavelet packets the results obtained from the two approximations.

2. Method of representation according to Claim 1, **characterized in that** the original modelling function is a BTF function (*Bidirectional Texture Function*) or an SVBRDF function (*Spatially-Varying Bidirectional Reflectance Distribution Function*).

3. Method of representation according to Claim 1, **characterized in that** the step of polynomial approximation (E21) of the original modelling function is implemented from an original mesh that results from a paraboloidal projection of a three-dimensional space into a two-dimensional space of median vectors obtained from a vector that represents the direction of the point of view and from vectors that respectively represent each of the directions of the light.

4. Method of representation according to Claim 1, **characterized in that** the step of geometric approximation (E22) of the residue is implemented from an approximation mesh that results from a paraboloidal projection of a three-dimensional space into a two-dimensional space of median vectors obtained from a vector that represents the direction of the point of view and from vectors that respectively represent directions chosen among the directions of the light.

5. Method of representation according to Claim 1, **characterized in that** the step of simplification (E3) by decomposing into wavelet packets the polynomial approximation of the original modelling function and the geometric approximation of the residue includes obtaining subbands composed of approximation coefficients and detail coefficients.

6. Method of representation according to Claim 5, **characterized in that**, by applying a simplification criterion, subbands are selected among the subbands obtained and, when a subband is selected, a presence map is updated.

7. Method for rendering a representation of a texture of an object, which representation is obtained by approximating an original function for modelling the interaction between light emitted by a light source and the material, which function is defined on the basis of pixels, points of view and directions of the light, **characterized in that** it comprises:

   - a step of reconstruction (F3) comprising reconstituting a polynomial approximation of the original modelling function and reconstituting a geometric approximation, according to a predefined number of directions of the light, of a residue that results from the difference between the original modelling function and the polynomial approximation of said function.

8. Device for representing a texture of an object by approximating an original function modelling the interaction between light emitted by a light source and the material, which function is defined on the basis of pixels, points of view and directions of the light, **characterized in that** it comprises:

   - a factorization module (M12) that implements, per point of view, a polynomial approximation of the original modelling function and a geometric approximation according to a predefined number of directions of the light, of a residue that results from the difference between the original modelling function and the polynomial approximation of said function,
   - a module (M13) for simplifying the results obtained at the output of the factorization module.

9. Device for rendering the representation of a texture of an object, which representation is obtained by approximating an original function modelling the interaction between light emitted by a light source and the material, which function is defined on the basis of pixels, points of view and directions of the light, **characterized in that** it comprises:

   - reconstruction means for reconstituting a polynomial approximation of the original modelling function and for reconstituting a geometric approximation according to a predefined number of directions of the light, of a residue that results from the difference between the original modelling function and the polynomial approximation of said function.

10. Computer program, **characterized in that** it includes instructions for executing the steps of a method for representing a texture of an object by approximating an original function modelling the interaction between light emitted by a light source and the material, which function is defined on the basis of pixels, points of view and directions of the light, according to one of Claims 1 to 6 when the program is executed on a computer.

11. Computer program, **characterized in that** it included instructions for executing the steps of a method for rendering a representation of a texture of an object, which representation is obtained by approximating an original function modelling the interaction between light emitted by a light source and the material, which function is defined on the basis of pixels, points of view and directions of the light, according to Claim 7 when the program is executed on a computer.

12. Graphical terminal comprising a rendering device according to Claim 9.

E1 — Séparation

Factorisation

E2 — Approximation polynomiale — E21

Approximation géométrique — E22

E3 — Simplification

E4 — Assemblage

**Fig. 1**

**Fig. 2a**

**Fig. 2b**

**Fig. 3**

**Fig. 4**

## RÉFÉRENCES CITÉES DANS LA DESCRIPTION

**Documents brevets cités dans la description**

- WO 2008110719 A

**Littérature non-brevet citée dans la description**

- **TOM MALZBENDER et al.** Polynomial Texture Maps. *SIGGRAPH '01 : Proceedings of the 28th annual conférence on computer graphics and interactive techniques,* 2001, 519-528
- Preserving realism in real-time rendering of bidirectional texture functions. **J. MESETH.** OpenSG Symposium 2003. Eurographics Association, Avril 2003, 89-96

- View-independent environment maps - HWWS '98. **WOLFGANG HEIDRICH ; HANS-PETER SEIDEL.** View-independent environment maps - HWWS '98. ACM, 1998, 39